# EUROPÄISCHE PATENTANMELDUNG

(11) **EP 3 040 817 A1**
(43) Veröffentlichungstag der Anmeldung: **06.07.2016**
(21) Anmeldenummer: 16150192.9
(22) Anmeldetag: 05.01.2016
(51) Int. Cl.: G06F 3/01, G06F 3/0488

(54) **VORRICHTUNG UND VERFAHREN ZUR EINGABE EINES TEXTES ÜBER VIRTUELLE BEDIENELEMENTE MIT HAPTISCHER RÜCKKOPPLUNG ZUR SIMULATION EINER TASTENHAPTIK, INSBESONDERE IN EINEM KRAFTFAHRZEUG**

(30) Priorität: 05.01.2015 DE 102015200038
(71) Anmelder: Volkswagen AG, 38440 Wolfsburg (DE)
(72) Erfinder: Czelnik, Mark Peter, 38440 Wolfsburg (DE); Klaas, Michael, 38179 Schwülper (DE); Rieger, Carsten, 38268 Lengede (DE)
(74) Vertreter: Patentanwälte Bressel und Partner mbB

(57) **Zusammenfassung**

Vorrichtung (1), insbesondere in einem Kraftfahrzeug (50), zur Eingabe eines Textes mit haptischer Rückkopplung, umfassend eine berührungsempfindliche Positionserfassungseinrichtung (2) zum Bestimmen einer zweidimensionalen Betätigungselementposition, mindestens ein mit der berührungsempfindlichen Positionserfassungseinrichtung (2) direkt oder indirekt verbundenes Aktorelement (3) zur haptischen Rückkopplung, eine Steuereinrichtung (4), wobei die Steuereinrichtung (4) Auslösebereiche von virtuellen Bedienelementen (20) festlegt und wobei beim Betreten und Verlassen des Auslösebereichs eines der virtuellen Bedienelemente (20) durch die zweidimensionale Betätigungselementposition jeweils ein Signal an dem Aktorelement (3) ausgegeben wird. Die Erfindung umfasst ferner zugehöriges Verfahren.

## Beschreibung

Die Erfindung betrifft eine Vorrichtung und ein Verfahren zur Eingabe eines Textes über virtuelle Bedienelemente mit haptischer Rückkopplung, insbesondere in einem Kraftfahrzeug.

Moderne Kraftfahrzeuge sind mit einer Vielzahl von Zusatzfunktionen, welche über den reinen Beförderungszweck eines Kraftfahrzeugs hinausgehen, ausgestattet. Dies können beispielsweise Multimediasysteme zum Empfang von Radio oder der Wiedergabe von medialen Inhalten wie Musik, Filmen oder Bildern, Kommunikationssysteme, welche eine weltweite sprach- oder textbasierte Kommunikation ermöglichen, oder auch Navigationssysteme sein, welche automatisch die Route berechnen, auf der die Fahrtstrecke möglichst zeitsparend und stauvermeidend zurückgelegt werden kann. Weiterhin sind Systeme denkbar, welche dem Fahrer oder einem Techniker in Form eines sogenannten Bordcomputers Auskunft über den Zustand des Kraftfahrzeugs geben. Allen diesen Systemen ist gemein, dass sie eine Interaktion mit dem Fahrzeugführer oder den Beifahrern über verschiedene Eingabe- und Ausgabekanäle ermöglichen und voraussetzen.

Neben sprachbasierten Eingabemöglichkeiten spielt auch die Texteingabe auf einer Tastatur eine Rolle, beispielsweise bei der Eingabe von Straßen- und Ortsnamen in das Navigationssystem oder bei der Eingabe eines Personennamens in das Telefonbuch.

Aus dem Stand der Technik sind mehrere Varianten bekannt, wie ein Text eingegeben werden kann. Neben der in Fahrzeugen weniger verbreiteten realen Tastatur, bei der jedem Buchstaben oder jeder Ziffer eine physisch ausgebildete Taste zugeordnet wird, finden sich vor allem virtuell nachgebildete Tastaturen, deren Tasten entweder direkt über eine berührungsempfindliche Anzeige (Touchscreen) oder über einen Drehdrückgeber einzeln angewählt und betätigt werden können. Um dem Benutzer nach Tastendruck eine Rückmeldung über das Betätigen einer Taste zu geben, sind sowohl akustische wie haptische Rückkopplungen üblich. Beispielsweise kann nach jedem Tastendruck ein akustisches Signal dem Benutzer den Tastendruck anzeigen und bestätigen. Eine haptische Rückkopplung kann dabei beispielsweise in Form einer Vibration der berührungsempfindlichen Anzeige erfolgen. Diese Vibration wird üblicherweise mit Hilfe von an dem Gehäuse angebrachten Aktoren hervorgerufen. Die akustische Rückkopplung wird über das Multimediasystem des Fahrzeugs ausgegeben.

Ein Nachteil der vorgenannten Vorrichtungen und Verfahren ist, dass sie zwar eine Rückkopplung über den Tastendruck geben, sobald die Taste gedrückt wurde, die Bedienung der virtuellen Tastatur aber sonst keinerlei haptische Rückmeldung bietet. Dies ist insbesondere für den Fahrzeugführer beim Fahren nachteilig, da er jede Taste visuell suchen und finden muss, was durch einen frei schwingenden Arm, Vibrationen und Fahrbahnunebenheiten erschwert wird und wiederholt eine Blickabwendung von der Fahrbahn notwendig macht. Durch die Blickabwendung kommt es zu einer Beeinträchtigung der Sicherheit bei der Führung des Kraftfahrzeugs.

Es ist somit wünschenswert, eine virtuelle Tastatur zur Verfügung zu haben, welche die Bedienung beim Erfassen eines Textes verbessert. Dabei soll die Leichtigkeit der Bedienung, welche durch die Einführung der berührungsempfindlichen Eingabe entstanden ist, beibehalten werden.

Der Erfindung liegt somit das Problem zugrunde, eine Vorrichtung und ein Verfahren zum Erfassen eines Textes bereit zu stellen, deren Bedienung beim Erfassen verbessert ist.

Die technische Aufgabe wird erfindungsgemäß durch eine Vorrichtung mit den Merkmalen des Patentanspruchs 1 und ein Verfahren mit den Merkmalen des Patentanspruchs 14 gelöst. Vorteilhafte Ausgestaltungen der Erfindung ergeben sich aus den Unteransprüchen.

Der Erfindung liegt der Gedanke zugrunde, dass schon bei einfachen Bedienschritten, welche vor dem letztendlichen Tastendruck stattfinden, wie beispielsweise dem Suchen und Finden des virtuellen Bedienelements eines bestimmten Buchstabens oder Zeichens auf einer virtuellen Tastatur, eine Rückmeldung in Form eines haptischen Signals über ein Aktorelement, das beispielsweise an eine berührungsempfindliche Erfassungseinrichtung zur Erfassung der Betätigungselementposition angebracht ist, gegeben wird. So können beispielsweise das Betreten und das Verlassen einer einzelnen Taste durch eine Vibration oder einen Impuls am Aktorelement angezeigt werden. Der Benutzer erkennt auf diese Weise, ob er eine neue Taste betritt, ob er die Taste verlässt oder ob er sich noch auf der angewählten Taste befindet. Insbesondere in einem Kraftfahrzeug kann der Benutzer eine Eingabe vornehmen, ohne dass er dabei den Blick von der Fahrbahn abwenden muss. Dies hat nicht nur eine Erhöhung des Komforts bei der Bedienung von Multimedia- und Steuersystemen, sondern vor allem auch der Sicherheit der Führung des Fahrzeugs zur Folge.

Insbesondere werden somit eine verbesserte Vorrichtung für ein Kraftfahrzeug und ein verbessertes Verfahren für ein Kraftfahrzeug zur Eingabe eines Textes geschaffen.

### Definitionen

Ein virtuelles Bedienelement ist die virtuelle Nachbildung eines physischen Bedienelements. Das virtuelle Bedienelement weist einen Auslösebereich und vorzugsweise eine graphische Darstellung auf. Der für die Auslösung mittels einer Druckgeste vorgesehene Auslösebereich ist vorzugsweise Deckungsgleich mit dem Darstellungsbereich der graphischen Darstellung des virtuellen Bedienelements.

Eine berührungsempfindliche Positionserfassungseinrichtung ist eine zweidimensionale flache Berührfläche, auf dessen einen dem Benutzer zugewandten Oberfläche mindestens eine Betätigungselementposition bestimmt werden kann, wenn sich das Betätigungselement, beispielsweise ein Finger, in der Nähe oder auf der Oberfläche der Berührfläche befindet. Eine solche berührungsempfindliche Positionserfassungseinrichtung kann beispielsweise ein Touchscreen sein.

Ein Auslösebereich ist ein zweidimensionaler Bereich, in dem bei geeigneter berührender Betätigung eine bestimmte mit diesem Bereich verknüpfte Funktion ausgelöst werden kann. Ein Auslösebereich ist einem virtuellen Bedienelement zugeordnet.

Eine Tastatur bezeichnet eine Menge von zueinander angeordneten virtuellen Bedienelementen. Eine Tastatur kann beispielsweise eine virtuelle Nachbildung der Tasten in QWERTZ-Anordnung wie bei Standard-PC-Tastaturen oder ein Nummernblock sein.

Ein Betreten eines virtuellen Bedienelements bezeichnet den Moment, in dem die Betätigungselementposition innerhalb des dem virtuellen Bedienelement zugeordneten Auslösebereichs liegt, nachdem sie zuvor nicht innerhalb des Auslösebereichs erfasst war.

Ein Verlassen eines virtuellen Bedienelements bezeichnet den Moment, in dem die Betätigungselementposition außerhalb des dem virtuellen Bedienelement zugeordneten Auslösebereichs liegt, nachdem sie zuvor innerhalb des Auslösebereichs erfasst war.

Eine Anwahl eines virtuellen Bedienelements bezeichnet den Zustand zwischen einem Betreten und einem Verlassen eines virtuellen Bedienelements.

Ein Betätigen eines virtuellen Bedienelements bezeichnet die Handlung, mittels der die dem virtuellen Bedienelement zugeordnete Funktion ausgelöst wird. Ein Betätigen kann auf einem Touchscreen beispielsweise dadurch erfolgen, dass das Betätigungselement länger innerhalb des Auslösebereichs verweilt, d.h. eine Verweildauer oberhalb eines Schwellenwertes liegt, der vorfestgelegt ist. Ebenso denkbar ist, dass ein Betätigen beispielsweise durch Überschreiten einer bestimmten Kraftschwelle im Anpressdruck des Betätigungselements erfolgt. Ein Erfassen einer Berührposition eines Betätigungselements in einem Auslösebereich eines virtuellen Bedienelements reicht nicht, um eine Betätigung zu bewirken.

Sofern hier vom Erfassen oder Ermitteln einer Andruckkraft oder eines Anpressdrucks gesprochen wird, ist ein getrennt von der berührungsempfindlichen Positionserfassung ausgebildetes Erfassen oder Ermitteln gemeint. Dieses erfolgt mit mindestens einem zusätzlich zu der berührungsempfindlichen Positionserfassungseinrichtung ausgebildeten Druckkraftsensor.

### Bevorzugte Ausführungsformen

Insbesondere wird somit Vorrichtung, insbesondere in einem Kraftfahrzeug, zur Eingabe eines Textes mit haptischer Rückkopplung geschaffen, umfassend eine berührungsempfindliche Positionserfassungseinrichtung zum Bestimmen einer zweidimensionalen Betätigungselementposition, mindestens ein mit der berührungsempfindlichen Positionserfassungseinrichtung direkt oder indirekt verbundenes Aktorelement zur haptischen Rückkopplung, eine Steuereinrichtung, wobei die Steuereinrichtung Auslösebereiche von virtuellen Bedienelementen festlegt und beim Betreten und Verlassen des Auslösebereichs eines der virtuellen Bedienelemente durch die zweidimensionale Betätigungselementposition jeweils ein Signal an dem Aktorelement ausgegeben wird.

Ferner wird vorteilhafterweise ein Verfahren, insbesondere in einem Kraftfahrzeug, zur Eingabe eines Textes auf einer virtuellen Tastatur mit haptischer Rückkopplung vorgeschlagen, die folgenden Schritte umfassend: Zuordnen von Auslösebereichen zu virtuellen Bedienelementen, Erfassen einer Betätigungselementposition, Vergleich der Betätigungselementposition mit den Auslösebereichen der virtuellen Bedienelemente,
wobei beim Betreten und Verlassen des Auslösebereichs eines der virtuellen Bedienelemente durch die Betätigungselementposition jeweils eine haptische Rückkopplung gegeben wird.

Der Vorteil der Erfindung liegt darin, dass dem Benutzer schon vor Betätigen eines virtuellen Bedienelements eine haptische Rückkopplung gegeben wird. Für den Benutzer wird es somit möglich, die virtuellen Bedienelemente zu erfühlen. Diese Suchhaptik ermöglicht ein wesentlich schnelleres Auffinden eines gesuchten virtuellen Bedienelements und eine einfachere Kontrolle der Anwahl des virtuellen Bedienelements. Dadurch verringert sich die Anzahl von Fehleingaben, was wiederum einen gesteigerten Komfort bei der Bedienung von Multimedia- oder Steuersystemen in Kraftfahrzeugen zur Folge hat. Da eine haptische Rückkopplung erfolgt, muss der Fahrzeugführer darüber hinaus den Blick weniger oft von der Fahrbahn abwenden. Er kann dadurch das Geschehen vor dem Kraftfahrzeug ununterbrochen mit nahezu ungeteilter Aufmerksamkeit verfolgen und auf Hindernisse oder Gefahren in der Umgebung des Kraftfahrzeugs schneller reagieren. Dadurch erhöht sich die Sicherheit für den Fahrzeugführer, die Insassen und der anderen Verkehrsteilnehmer.

Eine besonders vorteilhafte Ausführungsform sieht vor, dass die Vorrichtung eine Anzeigeeinrichtung umfasst. Auf der Anzeigeeinrichtung können die virtuellen Bedienelemente graphisch dargestellt werden. Dadurch bekommt der Bediener neben der haptischen Rückkopplung auch eine visuelle Information über den Auslösebereich und/oder die mit dem virtuellen Bedienelement verknüpfte Funktion.

Die Anzeigeeinrichtung kann beispielsweise direkt hinter der berührungsempfindlichen Positionserfassungseinrichtung positioniert sein, so dass die haptische Rückkopplung beim Betreten und Verlassen eines virtuellen Bedienelements mit der visuellen Repräsentation des virtuellen Bedienelements übereinstimmt. Ebenfalls denkbar ist aber auch, dass die Anzeigeeinrichtung oder eine weitere Anzeigeeinrichtung an einem anderen Ort im Kraftfahrzeug angebracht ist. Ein möglicher Ort dafür könnte beispielsweise die Frontscheibe des Fahrzeugs sein. Beispielsweise könnte eine in die Frontscheibe projizierte Anzeige eine solche Anzeigeeinrichtung darstellen (sogenannte Head-up-Displays oder Reflexvisiere). Der Fahrer hat dann während der Bedienung sowohl die Fahrbahn als auch das virtuelle Bedienelement über die Anzeigeeinrichtung im Blickfeld, was einen Sicherheitsgewinn bedeutet, da er seinen Blick nicht mehr von der Fahrbahn abwenden muss.

Idealerweise werden bei einer Ausführungsform die mit den virtuellen Bedienelementen verknüpften Funktionen als graphische Repräsentationen auf der Anzeigeeinrichtung dargestellt. Dabei bieten sich sowohl Buchstaben, Ziffern oder Graphiken, beispielsweise in Form von Piktogrammen an. Hier kann auf die Erfahrung des Benutzers zurückgegriffen werden, wenn bereits bekannte oder im allgemeinen Verkehr gebräuchliche Repräsentationen für bestimmte Funktionen, die mit den virtuellen Bedienelementen verknüpft sind, zurückgegriffen werden. Beispielsweise können solche Repräsentationen Buchstaben des lateinischen Alphabets sein oder Graphiken, wie sie typischerweise in Navigationssystemen verwendet werden, wie das Piktogramm einer Zielfahne oder eines Verkehrszeichens für Staugefahr. Durch die graphische Repräsentation wird die Bedienung wesentlich erleichtert.

In einer weiteren besonders vorteilhaften Ausführungsform umfasst die Vorrichtung einen Lautsprecher, an dem zeitgleich mit dem Impuls am Aktorelement ein akustisches Signal ausgegeben wird. Dadurch wird dem Bediener neben der haptischen eine weitere sensorische Rückkopplung gegeben. Beispielsweise kann ein akustisches Sample abgespielt werden, das den Klang eines Tastendrucks oder Klicks nachbildet. Die zusätzliche akustische Rückkopplung ermöglicht es auf Grund von wahrnehmungspsychologischen Effekten, die Stärke der haptischen Rückkopplung zu reduzieren, ohne dass die Wahrnehmung beeinträchtigt wird. Die Amplitude des am Aktorelement anliegenden Impulses kann dann verringert werden, so dass das Aktorelement und sämtliche mit dem Aktorelement verbundenen anderen Elemente weniger schnell verschleißen. Der Lautsprecher kann direkt oder indirekt mit der Vorrichtung verbunden sein.

Das Sample kann wahlweise auch über die Lautsprecher eines Multimediasystems ausgegeben werden. Die Wahrnehmung ist jedoch schlechter, da wegen des räumlichen Hörens der akustische Ursprung häufig nicht mit der Betätigungselementposition übereinstimmt.

Daher ist eine Ausführungsform besonders vorteilhaft, bei der der Lautsprecher sich in unmittelbarer Nähe in oder an der Vorrichtung bzw. der berührungsempfindlichen Positionserfassungseinrichtung befindet. Eine kleine Beabstandung zur Betätigungselementposition führt beim Bediener zu einer logischen Verknüpfung des akustischen Signals mit dem Betätigen des virtuellen Bedienelements bzw. mit der haptischen Rückkopplung.

In einer vorteilhaften Ausführungsform der Erfindung ist vorgesehen, dass die virtuellen Bedienelemente eine Tastatur bilden. So können beispielsweise dem Benutzer bekannte Anordnungen nachgebildet werden, wie eine QWERTZ-Tastatur oder ein Nummernblock. Dadurch kann der Benutzer auf Erfahrungswissen zurückzugreifen und angelernte Bewegungsmuster beim Suchen und Betätigen der virtuellen Bedienelemente anwenden. Dadurch ist ihm die Bedienung der Vorrichtung sofort intuitiv klar und er benötigt nur wenig Eingewöhnungszeit.

In einer besonders vorteilhaften Ausführungsform umfasst die Vorrichtung einen Druckkraftsensor, der einen Anpressdruck eines Betätigungselements, beispielsweise eines Fingers, auf der berührungsempfindlichen Positionserfassungseinrichtung erfasst und der Steuereinrichtung einen dem Anpressdruck vorzugsweise proportionales Signal zuführt. Dadurch ist es möglich, neben der Betätigungselementposition auf der berührungsempfindlichen Positionserfassungseinrichtung, auch noch den Anpressdruck auszuwerten und für die Bedienung heranzuziehen. Dem Fachmann sind mehrere Arten von Druckkraftsensoren bekannt, beispielsweise ausgeführt als Dehnungsmessstreifen, als induktiver Druckkraftsensor oder als kapazitiver Druckkraftsensor.

Beispielsweise kann eine mit einem virtuellen Bedienelement verknüpfte Funktion oder Aktion durch Überschreiten einer bestimmten Kraftschwelle ausgelöst werden, wenn die Betätigungselementposition gerade mit dem Auslösebereich des virtuellen Bedienelements übereinstimmt. Denkbar sind auch weitere Kraftschwellen, welche durch Überschreiten oder Unterschreiten eine mit dem virtuellen Bedienelement verknüpfte Funktion auslösen.

In einer besonders vorteilhaften Ausführungsform wird bei Überschreiten einer bestimmten Kraftschwelle ein Signal am Aktorelement ausgegeben. Durch diese Ausführungsform wird es möglich, die Haptik einer physikalischen Taste nachzubilden. Hat der Bediener beispielsweise ein virtuelles Bedienelement bereits betreten und erhöht anschließend den Anpressdruck des auf diesem virtuellen Bedienelement positionierten Betätigungselementes, beispielsweise eines Fingers, so bekommt er bei Überschreiten der Kraftschwelle eine haptische Rückkopplung über das Aktorelement und/oder eine akustische Rückkopplung über einen Lautsprecher und die dem virtuellen Bedienelement zugeordnete Funktion wird ausgelöst.

Sinnvoll kann hierbei beispielsweise auch die Verwendung weiterer Kraftschwellen sein, welche bei Überschreiten oder Unterschreiten ein Signal am Aktorelement und/oder ein Signal am Lautsprecher ausgeben. Somit sind hierbei beispielsweise Simulationen der Haptik einer Taste einer Standard-PC-Tastatur oder einer physischen Mobiltelefontastatur möglich. Beide Muster sind dem Bediener bekannt und rufen somit einen Wiedererkennungseffekt hervor, der die Bedienung erleichtert. Denkbar sind auch individuell von dem Bediener wählbare Tastenhaptiken, die er nach seinem persönlichen Geschmack auswählen kann.

Es ist anzumerken, dass der Eindruck des Betätigen einer physikalischen Taste vor allem durch das Vorhandensein von zwei haptischen Rückkopplungen entsteht: eine haptische Rückkopplung ist beim Drücken der Taste spürbar, eine andere beim Loslassen der Taste (auch als Snap und Backsnap bezeichnet). Durch die Definition von zwei unterschiedlichen Kraftschwellen, welche über- bzw. unterschritten werden müssen, und bei denen jeweils ein Signal am Aktorelement und/oder ein Signal zeitgleich an einem Lautsprecher ausgegeben wird, kann die sensorische Erfahrung einer solchen physikalischen Taste nachgebildet werden.

Vorzugsweise unterscheiden sich deshalb die durch Über- und/oder Unterschreiten einer ersten, einer zweiten und/oder weiteren Kraftschwellen ausgelösten haptischen Rückkopplungen voneinander, sowie von den haptischen Rückkopplungen, welche beim Betreten und/oder Verlassen des Auslösebereichs eines virtuellen Bedienelements gegeben werden.

Ebenfalls unterscheiden sich vorzugsweise die haptischen Rückkopplungen, welche beim Betreten und/oder Verlassen des Auslösebereichs eines virtuellen Bedienelements gegeben werden, voneinander. Dies ist von Vorteil, um das Betreten und das Verlassen einer Taste voneinander unterscheiden zu können.

In einer Ausführungsform erfolgt bei Anwahl eines virtuellen Bedienelements eine weitere haptische Rückkopplung, welche sich von den anderen haptischen Rückkopplungen unterscheidet. Beispielsweise könnte eine fortwährende Vibration durch das Aktorelement mit einer Anwahl einhergehen, welche beispielsweise eine geringere Stärke als die anderen haptischen Rückkopplungen besitzt und erst beendet wird, wenn ein Betätigen oder ein Verlassen des virtuellen Bedienelements stattgefunden hat.

Bei einer weiteren vorteilhaften Ausführungsform wird eine graphische Repräsentation eines virtuellen Bedienelements beim Betreten des virtuellen Bedienelements auf einer Anzeigeeinrichtung vergrößert dargestellt. Dies bietet neben einer haptischen und einer optionalen akustischen Rückkopplung die Möglichkeit, zusätzlich noch eine visuelle Rückkopplung bereit zu stellen. Denkbar ist dabei sowohl eine vergrößerte Darstellung in einer Anzeigeeinrichtung, die direkt hinter der berührungsempfindlichen Positionserfassungseinrichtung angeordnet ist, als auch eine vergrößerte Darstellung in einer Anzeigeeinrichtung, die sich im Bereich der Frontscheibe des Kraftfahrzeugs befindet. So können beispielsweise Buchstaben einer Tastatur oder zum virtuellen Bedienelement gehörenden Piktogramme beim Betreten vergrößert dargestellt werden, um die Suche zu erleichtern.

Idealerweise wird bei einer Ausführungsform ein Inhalt der graphischen Repräsentation oder eine Funktion oder Aktion, die mit einem virtuellen Bedienelement verknüpft ist, als vorgelesener Text auf einem Lautsprecher ausgegeben. Beispielsweise können so einzelne Buchstaben einer Tastatur vorgelesen werden. Denkbar ist auch das Vorlesen eines semantischen Inhalts eines Piktogramms, das mit dem virtuellen Bedienelement verknüpft ist. Auf diese Weise erhält der Benutzer noch eine weitere Rückkopplung darüber, auf welchem virtuellen Bedienelement er sich gerade befindet.

In einer weiteren vorteilhaften Ausführungsform wird kontextbasiert ein Teil der virtuellen Bedienelemente deaktiviert. Ist eine Anzeigeeinrichtung vorhanden, die die virtuellen Bedienelemente abbildet, so werden die deaktivierten virtuellen Bedienelemente als deaktiviert gekennzeichnet. Beispielsweise können Buchstaben ausgeblendet oder in einer anderen Farbe dargestellt werden. Eine mit einem deaktivierten virtuellen Bedienelement verknüpfte Funktion kann dann nicht mehr ausgewählt und betätigt werden. So können beispielsweise bestimmte Buchstaben bei der Eingabe des Zielortes deaktiviert werden, wenn sich aus dem Kontext der vorher eingegeben Buchstabenfolge ergibt, dass es einen Zielort mit einem solchen Namen nicht gibt. Durch die kontextabhängige Deaktivierung der virtuellen Bedienelemente wird das Risiko einer Fehleingabe deutlich reduziert. Beim Betreten und Verlassen deaktivierter virtueller Bedienelemente wird vorzugsweise keine haptische Rückkopplung erzeugt.

Bei anderen Ausführungsformen kann beim Betreten und Verlassen von deaktivierten virtuellen Bedienelementen eine von der Rückkopplung, die bei aktiven virtuellen Bedienelementen erzeugt wird, abweichende Rückkopplung erfolgen. Vorzugsweise ist die Rückkopplung bei deaktivierten virtuellen Bedienelementen beim Betreten und Verlassen schwächer als bei aktiven virtuellen Bedienelementen.

In einer vorteilhaften Ausführungsform sind die haptischen Rückkopplungen beim Betreten und Verlassen unterschiedlich ausgeführt. Beispielsweise wird beim Betreten eine stärkere Rückkopplung gegeben als beim Verlassen. Dadurch erkennt der Bediener, ob er ein virtuelles Bedienelement betritt oder verlässt.

In einer Ausführungsform ist die haptische Rückkopplung impulsartig ausgeführt. Beispielsweise wird beim Betreten und/oder Verlassen von virtuellen Bedienelementen ein einzelner Impuls oder eine Vielzahl von Impulsen am Aktorelement ausgegeben, wobei ein Nachschwingen der berührungsempfindlichen Positionserfassungseinrichtung vorzugsweise gering gehalten wird. D.h. vorzugsweise wird die Berührfläche einmal ausgelenkt und kehrt dann in eine Ausgangstellung zurück. Gegebenenfalls gibt es einen oder mehrere strak bedämpfte Nach- oder Überschwinger.

In einer Ausführungsform umfasst die Vorrichtung eine Schnittstelle, an der von der berührungsempfindlichen Positionserfassungseinrichtung erfasste Betätigungselementpositionen und/oder ein der Anpressdruckkraft vorzugsweise proportionaler vom Druckkraftsensor erfasster Wert und/oder weitere Daten ausgegeben werden. Die Schnittstelle kann beispielsweise eine standardisierte Schnittstelle wie der in Kraftfahrzeugen verbreitete CAN-Bus sein, sie kann aber auch anders ausgebildet sein.

In einer Ausführungsform ist insbesondere vorgesehen, dass die Vorrichtung für eine Integration in einen Innenraum eines Kraftfahrzeugs ausgebildet ist, insbesondere in ein Cockpit des Kraftfahrzeugs, oder in eine Kopfstütze, einen Dachhimmel oder eine Mittelkonsole im hinteren Bereich des Kraftfahrzeugs.

Sämtliche Ausführungsformen, welche für ein Kraftfahrzeug beschrieben sind, können auch in weiteren Ausführungsformen ohne das Kraftfahrzeug realisiert werden. So können das erfindungsgemäße Eingabeverfahren und die erfindungsgemäße Vorrichtung in sämtlichen Gebieten, in denen eine Maschine-Mensch-Interaktion an einer Mensch-Maschine-Schnittstelle stattfindet, ausgebildet sein, beispielsweise in einem Computer, einem Laptop, einem Tabletcomputer, einem Smartphone, einem interaktiven Tisch, einem Fahrkartenautomat, einer Infosäule, einer interaktiven Steuerungsvorrichtung, in Leitständen und in Computern, welche blinde Personen unterstützen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zur Eingabe eines Textes über virtuelle Bedienelemente mit haptischer Rückkopplung zur Simulation einer Tastendhaptik;
- Fig. 2: eine Frontansicht einer Ausführungsform der Vorrichtung, bei der die berührungsempfindliche Positionserfassungseinrichtung und die Anzeigeeinrichtung hintereinander angeordnet sind;
- Fig. 3: eine perspektivische Rückseitenansicht der einzelnen Elemente einer Ausführungsform der Vorrichtung;
- Fig. 4: eine schematische Darstellung einer durch mehrere virtuelle Bedienelemente gebildeten Tastatur, wobei nur die Auslösebereiche der virtuellen Bedienelemente gezeigt sind;
- Fig. 5: eine schematische Darstellung der korrespondierenden graphischen Repräsentation der mehreren virtuellen Bedienelemente aus Fig. 4;
- Fig. 6: eine schematische Darstellung der graphischen Repräsentation, in der einige der virtuellen Bedienelemente deaktiviert sind;
- Fig. 7: eine schematische Darstellung einer vergrößerten Vorschauansicht einer graphischen Repräsentation eines angewählten virtuellen Bedienelements;
- Fig. 8: eine schematische Darstellung einer typischen Texteingabe auf einer Tastatur mit Hilfe einer Suchhaptik
- Fig. 9a bis 9f: eine schematische Darstellung einer Abfolge einer typischen Texteingabe auf einer Tastatur mit Hilfe einer Such- und Tastenhaptik, eines schematischen Messsignals am Druckkraftsensor und ausgegebenen Signalen am Aktorelement und am Lautsprecher;
- Fig. 10: ein schematisches Ablaufdiagramm des Verfahrens zur Eingabe eines Textes über virtuelle Bedienelemente mit haptischer Rückkopplung zur Simulation einer Tastenhaptik;
- Fig. 11: eine schematische Darstellung einer weiteren Ausführungsform der Vorrichtung in einer Mensch-Maschine-Schnittstelle.

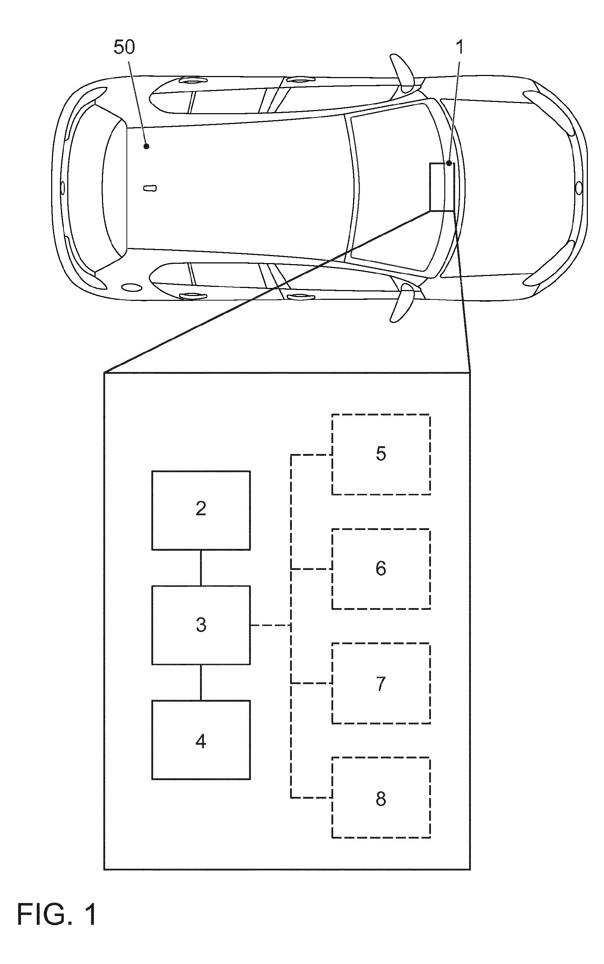

In Fig. 1 ist eine schematische Darstellung einer Ausführungsform der Vorrichtung 1 dargestellt. In einem Kraftfahrzeug 50 befindet sich im Fahrgastraum eine Vorrichtung 1 zur Eingabe eines Textes über virtuelle Bedienelemente mit haptischer Rückkopplung zur Simulation einer Tastenhaptik. Die Vorrichtung 1 umfasst mindestens eine berührungsempfindliche Positionserfassungseinrichtung 2, mindestens ein Aktorelement 3 und eine Steuereinrichtung 4. Die eine berührungsempfindliche Positionserfassungseinrichtung 2 und das Aktorelement 3 werden über die Steuereinrichtung 4 gesteuert. Die Steuereinrichtung 4 definiert die Auslösebereiche von virtuellen Bedienelementen auf einer zweidimensionalen Fläche. Um Funktionen auszulösen, wobei es sich beispielsweise um die Eingabe eines Textes für die Ortsangabe eines Navigationssystems oder die Eingabe eines Namens oder einer Nummer im Telefonbuch handeln kann, positioniert der Bediener ein Betätigungselement, beispielsweise seinen Finger, auf die berührungsempfindliche Positionserfassungseinrichtung 2, welche die Betätigungselementposition erfasst und an die Steuereinrichtung 4 übergibt. Die Steuereinrichtung 4 ermittelt dann, ob der Benutzer gerade beim Betreten oder Verlassen eines virtuellen Bedienelements ist und veranlasst dann entsprechend das Ausgeben eines Impulses am Aktorelement 3. Da das Aktorelement 3 direkt oder indirekt mit der berührungsempfindlichen Positionserfassungseinrichtung 2 verbunden ist, erfährt der Benutzer eine haptische Rückkopplung.

Vorzugsweise ist die Steuereinrichtung 4 als Zentralrechner oder Mikrocontroller ausgebildet und ihre Funktionen werden softwaremäßig durchgeführt.

Optional kann die Vorrichtung 1 eine Anzeigeeinrichtung 5 umfassen, welche graphische Repräsentationen der virtuellen Bedienelemente darstellt. Idealerweise ist die Anzeigeeinrichtung 5 so hinter der berührungsempfindlichen Positionserfassungseinrichtung 2 positioniert, dass die zu einem virtuellen Bedienelement gehörende graphische Repräsentation mit dem Bereich des virtuellen Bedienelements auf der berührungsempfindlichen Positionserfassungseinrichtung 2 übereinstimmt. Die Anzeigeeinrichtung 5 wird von der Steuereinrichtung 4 angesteuert.

Ebenfalls optional ist ein an der Vorrichtung 1 direkt oder indirekt angebrachter Druckkraftsensor 6. Idealerweise ist der Druckkraftsensor 6 so an der berührungsempfindlichen Positionserfassungseinrichtung 2 angebracht, dass der Anpressdruck eines Betätigungselements, beispielsweise der Anpressdruck eines Fingers des Bedieners, erfasst werden kann. Der Druckkraftsensor 6 erfasst den Anpressdruck eines Bedieners und leitet einen der Anpressdruckkraft proportionalen Wert der Steuereinrichtung 4 zu. Bei Überschreiten oder Unterschreiten einer oder mehrerer Kraftschwellen am Druckkraftsensor 6 kann durch die Steuereinrichtung 4 ein Signal an dem Aktorelement 3 ausgegeben werden. Ebenfalls können Funktionen oder Aktionen, die mit dem gedrückten virtuellen Bedienelement verknüpft sind, durch Über- oder Unterschreiten einer Kraftschwelle ausgelöst werden.

Ein weiteres optionales Merkmal ist ein in oder an der Vorrichtung 1 positionierter Lautsprecher 7. Kommt es im Laufe der Bedienung der Vorrichtung 1 zu einer haptischen Rückkopplung durch das Aktorelement 3, so kann zeitgleich ein Signal von der Steuereinrichtung 4 auf dem Lautsprecher 7 ausgegeben werden. Das Signal kann beispielsweise ein Sample sein, das den Klang eines Tastendrucks nachbildet.

Optional kann die Vorrichtung 1 eine Schnittstelle 8 umfassen, welche die von der Steuereinrichtung 4 gesammelten und verarbeiteten Daten zur Weiterverarbeitung ausgibt. Eine solche Schnittstelle 8 kann beispielsweise der in Kraftfahrzeugen verbreitete CAN-Bus sein, sie kann aber auch anders ausgebildet sein.

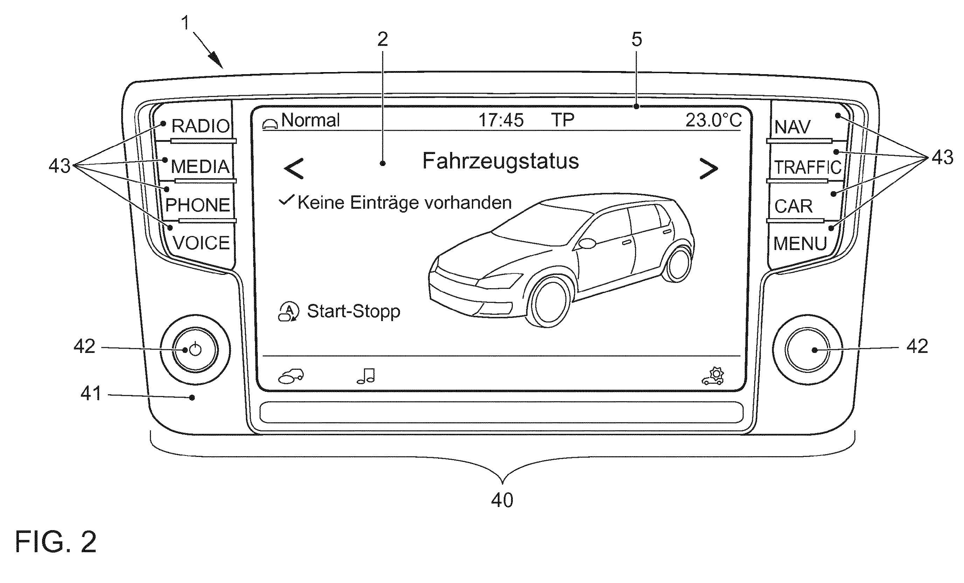

In Fig. 2 ist schematisch eine Ausführungsform der Vorrichtung 1 in Frontansicht abgebildet. Die Vorrichtung 1 ist dabei integriert in eine multimediale Anzeige-Bedienvorrichtung 40, wie sie heutzutage in Kraftfahrzeugen der Mittel- und Oberklasse üblich ist. In der Frontansicht sichtbar sind die Frontblende 41, die berührungsempfindliche Positionserfassungseinrichtung 2 und die Anzeigeeinrichtung 5. Die Steuereinrichtung 4 und das Aktorelement 5 sind in der Frontansicht nicht sichtbar. Des Weiteren umfasst die Anzeige-Bedienvorrichtung 40 zwei Drehdrückgeber 42 und mehrere physisch ausgebildete Tasten 42.

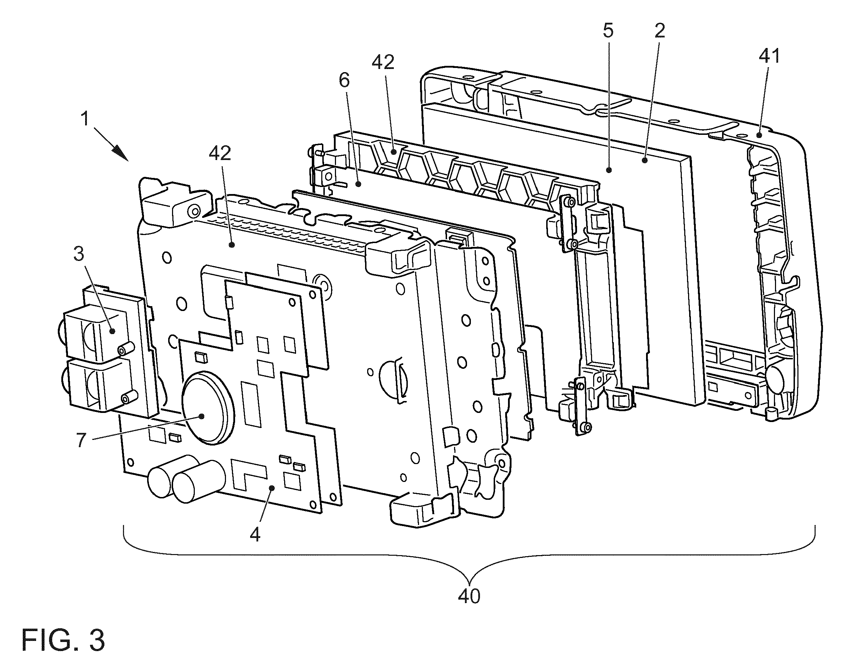

Fig. 3 zeigt eine perspektivische Rückseitenansicht der einzelnen Merkmale einer Ausführungsform der Vorrichtung 1. Hinter einer Frontblende 41 einer multimedialen Anzeige-Bedienvorrichtung 40 befindet sich eine berührungsempfindliche Positionserfassungseinrichtung 2 und dahinter eine Anzeigeeinrichtung 5. Die berührungsempfindliche Positionserfassungseinrichtung 2 und die Anzeigeeinrichtung 5 können auch zusammengefasst in einem einzigen Bauelement als sogenannter Touchscreen ausgebildet sein. Hinter der Anzeigeeinrichtung 5 befindet sich ein Druckkraftsensor 6. An der Rückseite der Anzeige-Bedienvorrichtung 40 befindet sich eine Steuereinrichtung 4 und ein mit dem Gehäuse direkt oder indirekt verbundenes Aktorelement 3. Das von der Steuereinrichtung 4 am Aktorelement 3 ausgegebene Signal beim Betreten, Verlassen oder Betätigen eines virtuellen Bedienelements pflanzt sich über das Gehäuse der Anzeige-Bedienvorrichtung 40 bis zur berührungsempfindlichen Positionserfassungseinrichtung 2 fort und überträgt sich somit auf das Betätigungselement, beispielsweise auf den Finger des Bedieners. Das Aktorelement 3 kann dabei entweder parallel oder senkrecht zur Ebene der Anzeigeeinrichtung 5 ausgelenkt werden. Eine parallele Auslenkung hat den Vorteil, dass die berührungsempfindliche Positionserfassungseinrichtung 2 steifer ausgeführt werden kann, was dem Bediener den Eindruck einer höheren Wertigkeit der Anzeige-Bedienvorrichtung 40 gibt. Darüber hinaus kann bei paralleler Auslenkung der Abstand zwischen berührungsempfindlicher Positionserfassungseinrichtung 2 und der Frontblende 41 bzw. anderen Elementen der Anzeige-Bedienvorrichtung 40 kleiner sein, so dass es zu einer geringeren Verunreinigung des Innenraums der Anzeige-Bedienvorrichtung 40 durch Staub etc. kommt. Eine senkrechte Auslenkung des Aktorelements 3 hat hingegen den Vorteil, dass der Bediener das Signal, beispielsweise über seinen Finger, stärker wahrnimmt und dadurch das Signal am Aktorelement 3 geringer ausgeprägt sein kann.

An der Steuereinrichtung 4 befindet sich ein Lautsprecher 7. Die Positionierung des Lautsprechers 7 in die Nähe der berührungsempfindlichen Positionserfassungseinrichtung 2 und der Anzeigeeinrichtung 5 hat den Vorteil, dass das akustische Signal von dem Bediener mit dem Ort der Anzeige-Bedienvorrichtung 40 im Kraftfahrzeug assoziiert wird. Diese durch wahrnehmungspsychologische Überlegungen motivierte Anordnung erhöht die Wahrnehmung der Rückkopplung beim Bediener.

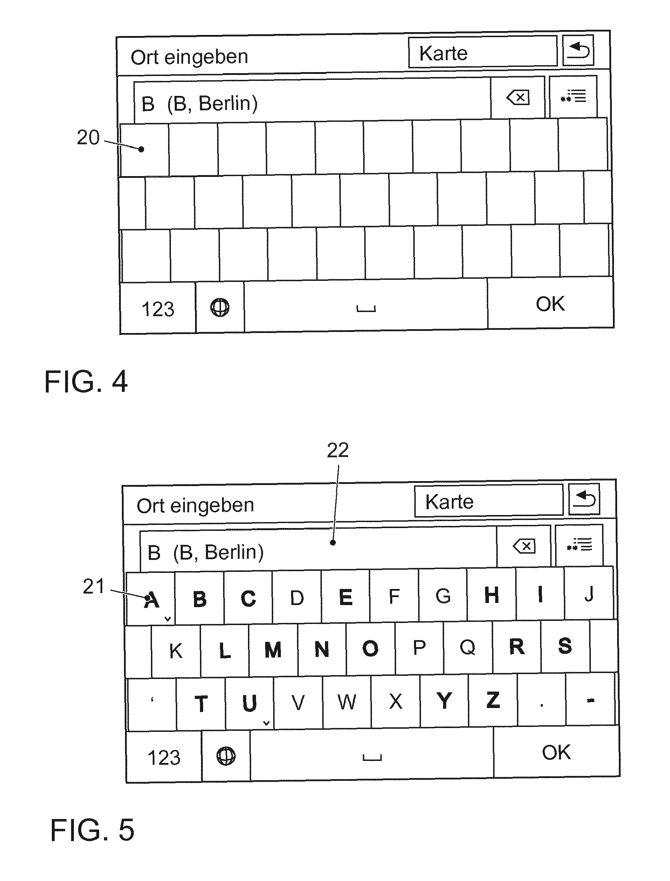

In Fig. 4 ist eine schematische Darstellung von virtuellen Bedienelementen 20 gezeigt. Dabei sind lediglich die mit den virtuellen Bedienelementen verknüpften Auslösebereiche als geschlossene Rechtecke dargestellt.

In Fig. 5 sind die mit Fig. 4 korrespondierenden graphischen Repräsentationen 21 der virtuellen Bedienelemente gezeigt. Die virtuellen Bedienelemente und die graphischen Repräsentationen 21 können beispielsweise eine Tastatur bilden, auf der das lateinische Alphabet in seiner Reihenfolge abgebildet ist. Es sind aber auch andere Anordnungen und graphische Repräsentationen 21 denkbar. In Fig. 5 ist auch ein Eingabefeld 22 sichtbar, in dem ein Text mit Hilfe der Tastatur eingegeben werden kann.

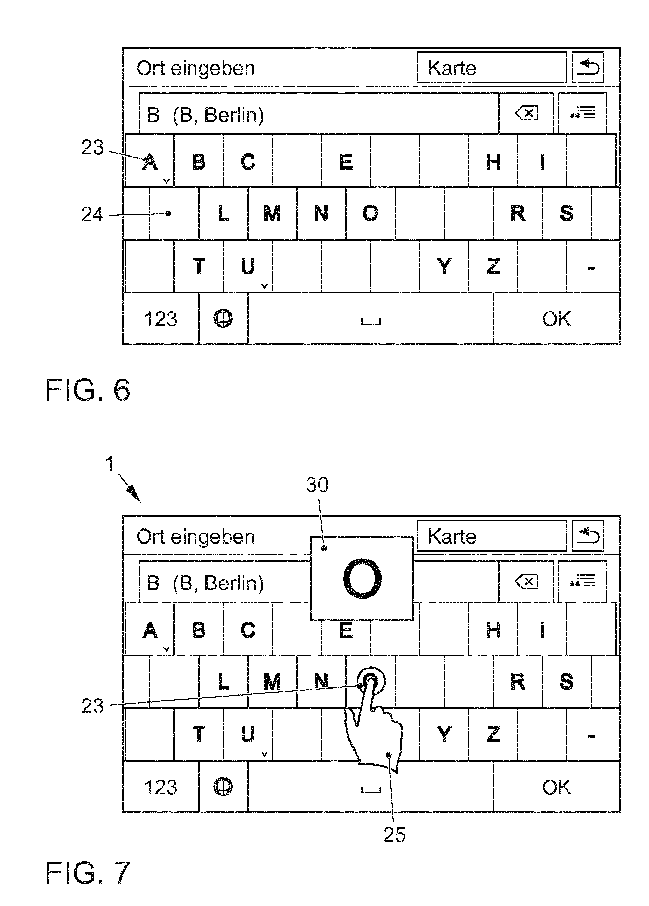

Fig. 6 zeigt eine ähnliche graphische Repräsentation 21 der virtuellen Bedienelemente wie Fig. 5. Die graphischen Repräsentationen sind jedoch in zwei Kategorien unterteilt. Je nach Kontext, also beispielsweise einem bereits eingegebenen Text und den möglichen folgenden Buchstaben, sind einige virtuelle Bedienelemente aktiviert oder deaktiviert. Entsprechend unterscheiden sich die graphische Repräsentation eines aktiven virtuellen Bedienelements 23 und die graphische Repräsentation eines deaktivierten virtuellen Bedienelements 24. Beispielsweise können sich die Farben der Buchstaben auf den graphischen Repräsentationen unterscheiden. So kann ein aktives virtuelles Bedienelement 23 beispielsweise die Buchstabenfarbe weiß besitzen, wohingegen ein deaktiviertes virtuelles Bedienelement 24 die Buchstabenfarbe grau besitzt.

In Fig. 7 ist schematisch eine Ausführungsform der Vorschauansicht 30 der graphischen Repräsentation eines aktiven virtuellen Bedienelements 23 gezeigt. Befindet sich das Betätigungselement, beispielsweise der Finger des Bedieners 25, auf einem aktiven virtuellen Bedienelement 23, hier beispielsweise dem Buchstaben "O", so wird die graphische Repräsentation beispielsweise vergrößert dargestellt. Somit wird dem Bediener zusätzlich eine visuelle Rückkopplung gegeben. Befindet sich das Betätigungselement, hier der Finger des Bedieners 25, beispielsweise auf einem deaktivierten virtuellen Bedienelement 24, so wird keine Vorschauansicht 30 abgebildet. Es sind aber auch andere Vorschauansichten 30, sowohl von aktiven 23 als auch deaktivierten 24 virtuellen Bedienelementen denkbar.

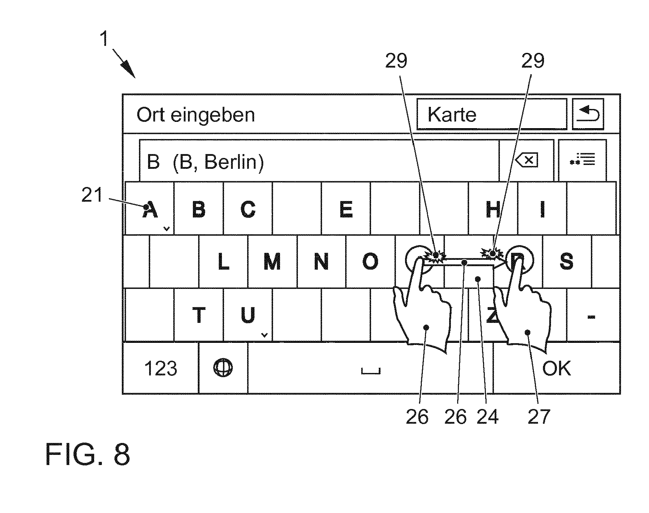

In Fig. 8 ist schematisch die Funktionsweise der Suchhaptik erklärt. Man sieht die graphische Repräsentation 21 der virtuellen Bedienelemente. Das Betätigungselement, hier beispielsweise der Finger des Bedieners 25, befindet sich auf einer ersten Position 26 innerhalb des Auslösebereiches eines aktiven virtuellen Bedienelements 23, hier beispielsweise einer Taste mit einem Buchstaben des lateinischen Alphabets. Durch Betätigen, beispielsweise durch Erhöhen des Anpressdrucks über einen Auslöseschwellenwert oder alternativ über ein Verharren an der Berührposition für eine Zeitdauer oberhalb einer Auslöseschwellendauer, des aktiven virtuellen Bedienelements 23 kann der Buchstabe eingegeben werden. Optional erfolgt eine haptische und/oder akustische Rückkopplung beim Betätigen, die verschieden von den haptischen und/oder akustischen Rückkopplungen beim Betreten und Verlassen von virtuellen Bedienelementen ist. Nach dem Eingeben oder Nichteingeben des Buchstabens verlässt der Finger des Bedieners 25 die erste Position 26. Beim Verlassen des Auslösebereichs des aktiven virtuellen Bedienelements 23 erfolgt eine haptische Rückkopplung 29 durch Ausgeben eines Signals am Aktorelement und optional eine zeitgleiche akustische Rückkopplung 29 durch Ausgabe eines Signals am Lautsprecher. Der Finger des Bedieners 25 folgt nun einer Trajektorie 28, wobei der Bediener das nächste virtuelle Bedienelement zur Eingabe ansteuert. Um dem Finger des Bedieners 25 die Suche zu erleichtern, erfolgt beim Betreten eines nächsten aktiven virtuellen Bedienelements 23, dessen Auslösebereich an einer zweiten Position 27 liegt, wieder eine haptische und optional eine akustische Rückkopplung 29, um dem Bediener das Betreten des nächsten aktiven virtuellen Bedienelements 23 anzuzeigen. Ein Überstreichen von deaktivierten virtuellen Bedienelementen 28 führt zu keiner haptischen und/oder akustischen Rückkopplung.

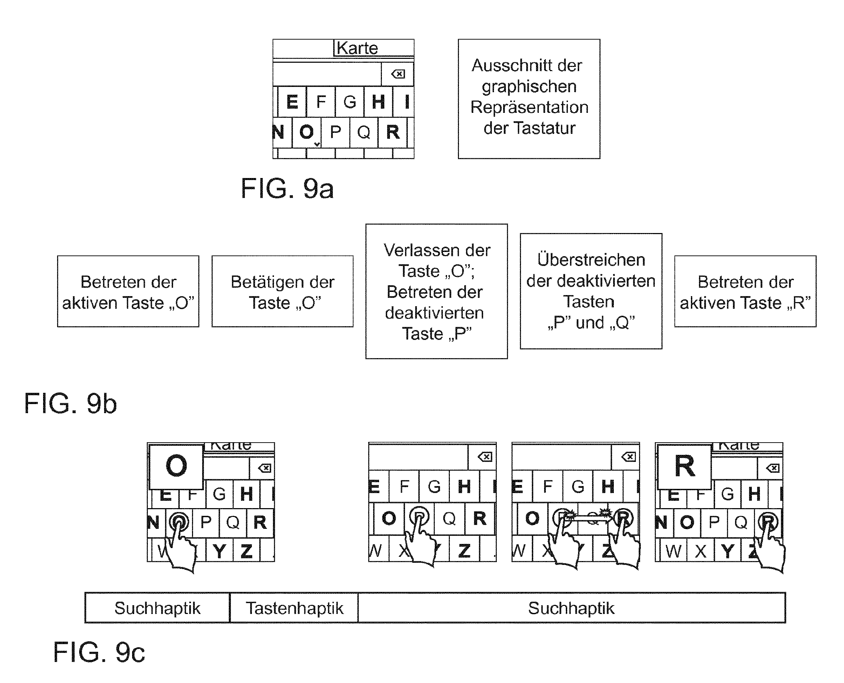

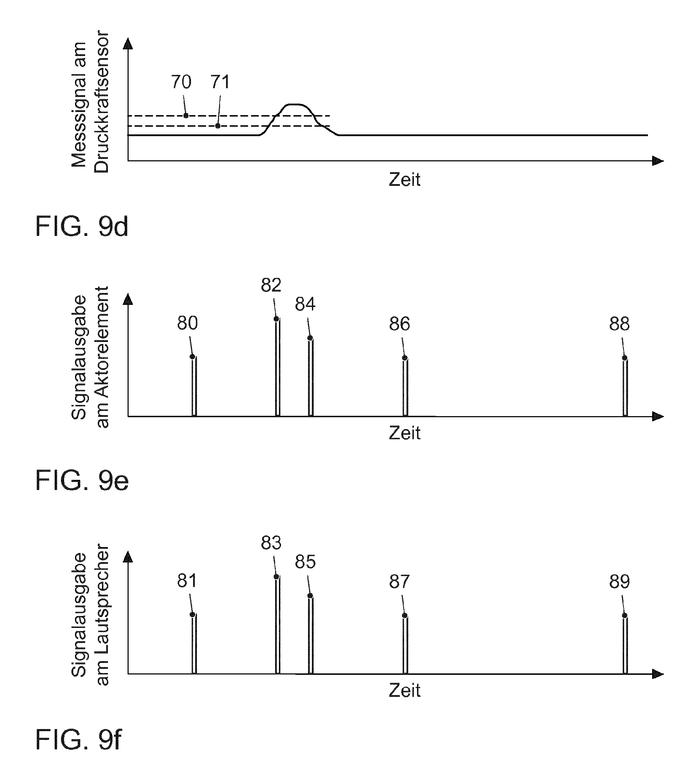

In Fig. 9a bis 9f ist der Ablauf einer typischen Texteingabe schematisch dargestellt. Dabei ist sowohl die Suchhaptik beim Suchen eines bestimmten virtuellen Bedienelements als auch die Tastenhaptik beim Betätigen eines virtuellen Bedienelements dargestellt. Fig. 9a zeigt den betrachteten Ausschnitt der graphischen Repräsentation eines Teils der virtuellen Bedienelemente, welche hier eine alphabetische Tastatur darstellen. In Fig. 9b sind die einzelnen Schritte beschrieben, die der Bediener im Verlauf der Zeit mit einem Betätigungselement, hier beispielsweise seines Fingers, vornimmt, um ein virtuelles Bedienelement zu suchen und zu betätigen. In Fig. 9c sind schematisch die Aktionen des Bedieners auf der graphischen Repräsentation bzw. der berührungsempfindlichen Positionserfassungseinrichtung gezeigt. Fig. 9d zeigt den Verlauf des Messsignals am Druckkraftsensor mit der Zeit, sowohl im Modus der Suchhaptik als auch im Modus der Tastenhaptik. Fig. 9e und Fig. 9f zeigen den Verlauf der Signale, die am Aktorelement und an einem optionalen Lautsprecher ausgegeben werden.
Im ersten Schritt betritt der Bediener beispielsweise ein aktives virtuelles Bedienelement, das den Buchstaben "O" repräsentiert. Beim Betreten erfolgt im Modus der Suchhaptik eine haptische Rückkopplung durch Ausgabe eines Signals am Aktorelement, hier eines einfachen Impulses 80. Optional kann die haptische Rückkopplung durch zeitgleiche Ausgabe eines Impulses 81 am Lautsprecher unterstützt werden. Der Bediener entscheidet sich nun dafür, den Buchstaben "O" einzugeben und erhöht deshalb den Druck auf der berührungsempfindlichen Positionserfassungseinrichtung, um das virtuelle Bedienelement zum Buchstaben "O" zu betätigen. Der ansteigende Druck wird vom Druckkraftsensor erfasst und im Modus der Tastenhaptik erfolgt bei Überschreiten einer ersten Kraftschwelle 70 eine haptische 82 und optional eine akustische 83 Rückkopplung. Durch das Überschreiten der ersten Kraftschwelle 70 wird hier ebenfalls eine Funktion ausgelöst, hier beispielsweise die Eingabe des Buchstabens "O" in das Eingabefeld. Bei dem anschließenden Unterschreiten einer zweiten Kraftschwelle 71 erfolgt, immer noch im Modus der Tastenhaptik, eine weitere haptische 84 und optional akustische 85 Rückkopplung durch Ausgabe eines Signals am Aktorelement bzw. am Lautsprecher. Dabei haben die Signale im Modus der Tastenhaptik beispielsweise eine größere Amplitude als im Modus der Suchhaptik. So kann dem Bediener der Tastendruck verdeutlicht werden. Nach dem Tastendruck und dem Unterschreiten der zweiten Kraftschwelle 71 verlässt der Bediener das virtuelle Bedienelement des Buchstabens "O" zur rechten Seite hin. Beim Verlassen wird im Modus der Suchhaptik ein Impuls 86 am Aktorelement und optional ein Impuls 87 am Lautsprecher ausgegeben, um dem Bediener das Verlassen anzuzeigen. Anschließend betritt der Bediener ein deaktiviertes virtuelles Bedienelement, hier beispielsweise eine Taste für den Buchstaben "P". Da die Taste zu einem deaktivierten virtuellen Bedienelement gehört, wird keine haptische oder akustische Rückkopplung gegeben. Danach überstreicht der Bediener nochmals ein deaktiviertes virtuelles Bedienelement, beispielsweise eine Taste für den Buchstaben "Q". Es gibt wiederum keinerlei Rückkopplung. Erst bei Betreten des nächsten aktiven virtuellen Bedienelements, hier beispielsweise des Buchstabens "R" bekommt er wieder eine haptische 88, und optional eine akustische 89, Rückkopplung durch ein Signal am Aktorelement. Dem Bediener ist somit in jedem Moment klar, ob er sich auf einem aktiven virtuellen Bedienelement befindet oder nicht.

Die am Aktorelement und am Lautsprecher ausgegebenen Signale können beliebige Signale sein und sind hier nur zur schematischen Verdeutlichung als einfache Impulse 80-89 dargestellt. Beispielsweise denkbar ist die Ausgabe eines Klangsamples am Lautsprecher, das den Klang einer physikalischen Taste nachbildet.

Ebenfalls sind komplexere Signale am Aktorelement denkbar: ähnlich einem Klangsample könnte beispielsweise die Kraftcharakteristik einer physisch ausgebildeten Taste bestimmt werden und anschließend durch das Signal am Aktorelement nachgebildet werden. Denkbar sind auch mathematische Funktionen, die den Kontext der virtuellen Bedienelemente, die Betätigungselementposition, hier des Fingers des Bedieners, und/oder den Anpressdruck des Betätigungselements und/oder weitere Parameter als Eingangsparameter verwenden, um ein Ausgangssignal für das Aktorelement und optional den Lautsprecher zu berechnen.

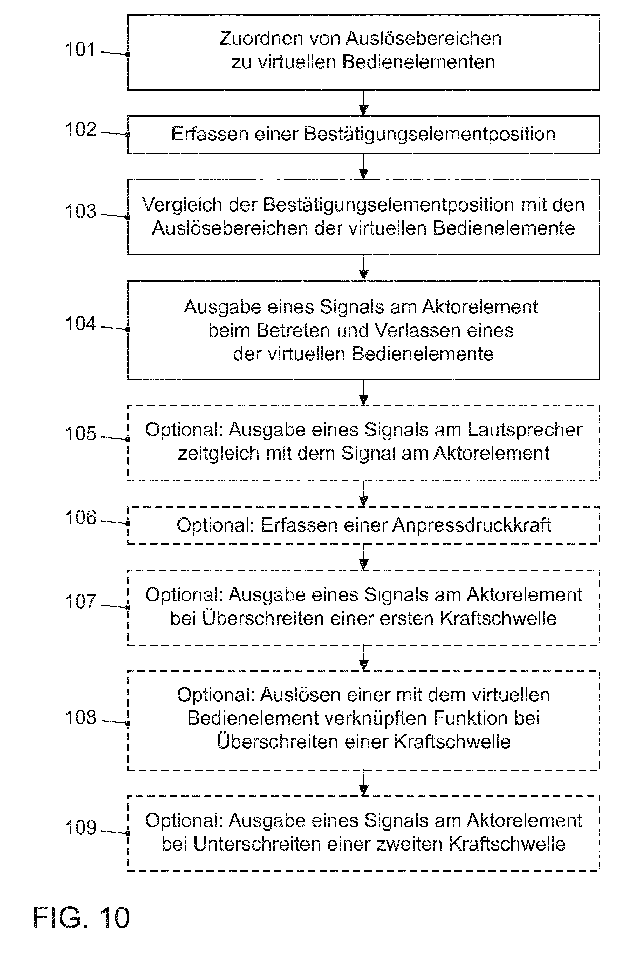

Fig. 10 zeigt ein schematisches Ablaufdiagramm des Verfahrens zur Eingabe eines Textes über virtuelle Bedienelemente mit haptischer Rückkopplung in Such- und optionaler Tastenhaptik. Im ersten Schritt werden den virtuellen Bedienelementen Auslösebereiche zugeordnet 101. Anschließend wird über eine berührungsempfindliche Positionserfassungseinrichtung eine Betätigungselementposition eines Bedieners erfasst 102. Die erfasste Betätigungselementposition wird mit den Auslösebereichen der virtuellen Bedienelemente verglichen 103. Beim Betreten und Verlassen eines virtuellen Bedienelements wird ein Signal am Aktorelement ausgegeben 104. Optional kann zeitgleich ein weiteres Signal an einem Lautsprecher ausgegeben werden 105. Ebenfalls optional kann zeitgleich eine Anpressdruckkraft über einen Druckkraftsensor erfasst werden 106. Bei Überschreiten einer ersten Kraftschwelle bzw. wird ein weiteres Signal am Aktorelement und optional ein weiteres Signal am Lautsprecher ausgegeben 107. Optional kann durch das Überschreiten der ersten Kraftschwelle eine mit dem virtuellen Bedienelement verknüpfte Funktion, beispielsweise die Eingabe eines Buchstabens, ausgelöst werden 108. Ferner wird optional bei Unterschreiten einer zweiten Kraftschwelle ein weiteres Signal am Aktorelement und optional ein weiteres Signal am Lautsprecher ausgegeben 109.
Durch die Rückkopplung während der Tastensuche wird dem Bediener das Auffinden des gesuchten virtuellen Bedienelements erleichtert. Durch das Erfassen der Anpressdruckkraft und den mit den beiden Kraftschwellen verknüpften haptischen bzw. akustischen Rückkopplungen ist es darüber hinaus möglich, das haptische und akustische Empfinden während des Betätigens einer physisch ausgebildeten Taste zu simulieren. Der Bediener erhält somit eine vollständigere Information über seine Aktionen, was die Eingabe während der Fahrt verbessert und Fehlbedienungen verringert.

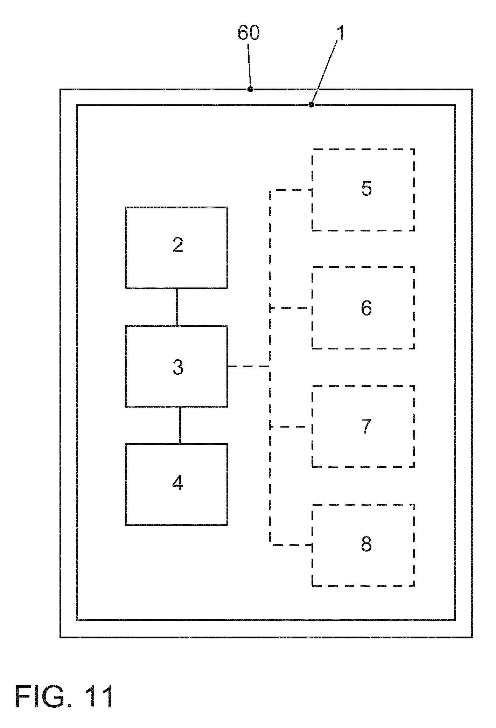

In Fig. 11 ist eine schematische Darstellung einer weiteren Ausführungsform der Vorrichtung 1 zur Eingabe eines Textes über virtuelle Bedienelemente mit haptischer Rückkopplung zur Simulation einer Tastenhaptik in einer Mensch-Maschine-Schnittstelle 60 dargestellt.

Eine Mensch-Maschine-Schnittstelle 60 kann beispielsweise ein Computer, ein Laptop, ein Tabletcomputer, ein Smartphone, ein interaktiver Tisch, ein Fahrkartenautomat, eine Infosäule, eine interaktive Steuerungsvorrichtung in Leitständen, Hausgeräten oder Unterhaltungselektronik oder ein Computer, welcher blinde Personen unterstützt, sein.

Die Vorrichtung 1 umfasst mindestens eine berührungsempfindliche Positionserfassungseinrichtung 2, mindestens ein Aktorelement 3 und eine Steuereinrichtung 4. Die eine berührungsempfindliche Positionserfassungseinrichtung 2 und das Aktorelement 3 werden über die Steuereinrichtung 4 gesteuert. Die Steuereinrichtung 4 definiert die Auslösebereiche von virtuellen Bedienelementen auf einer zweidimensionalen Fläche. Um Funktionen auszulösen, wobei es sich beispielsweise um die Eingabe eines Textes für eine Banküberweisung, eines Namens, eines Suchbegriffes oder anderen Daten handeln kann, positioniert der Bediener ein Betätigungselement, beispielsweise seinen Finger, auf die berührungsempfindliche Positionserfassungseinrichtung 2, welche die Betätigungselementposition erfasst und an die Steuereinrichtung 4 übergibt. Die Steuereinrichtung 4 ermittelt dann, ob der Benutzer gerade beim Betreten oder Verlassen eines virtuellen Bedienelements ist und veranlasst dann entsprechend das Ausgeben eines Impulses am Aktorelement 3. Da das Aktorelement 3 direkt oder indirekt mit der berührungsempfindlichen Positionserfassungseinrichtung 2 verbunden ist, erfährt der Benutzer eine haptische Rückkopplung.

Vorzugsweise ist die Steuereinrichtung 4 als Zentralrechner oder Mikrocontroller ausgebildet und ihre Funktionen werden softwaremäßig durchgeführt.

Optional kann die Vorrichtung 1 eine Anzeigeeinrichtung 5 umfassen, welche graphische Repräsentationen der virtuellen Bedienelemente darstellt. Idealerweise ist die Anzeigeeinrichtung 5 so hinter der berührungsempfindlichen Positionserfassungseinrichtung 2 positioniert, dass die zu einem virtuellen Bedienelement gehörende graphische Repräsentation mit dem Bereich des virtuellen Bedienelements auf der berührungsempfindlichen Positionserfassungseinrichtung 2 übereinstimmt. Die Anzeigeeinrichtung 5 wird von der Steuereinrichtung 4 angesteuert.

Ebenfalls optional ist ein an der Vorrichtung 1 direkt oder indirekt angebrachter Druckkraftsensor 6. Idealerweise ist der Druckkraftsensor 6 so an der berührungsempfindlichen Positionserfassungseinrichtung 2 angebracht, dass der Anpressdruck eines Betätigungselements, beispielsweise der Anpressdruck eines Fingers des Bedieners, erfasst werden kann. Der Druckkraftsensor 6 erfasst den Anpressdruck eines Bedieners und leitet einen der Anpressdruckkraft proportionalen Wert der Steuereinrichtung 4 zu. Bei Überschreiten oder Unterschreiten einer oder mehrerer Kraftschwellen am Druckkraftsensor 6 kann durch die Steuereinrichtung 4 ein Signal an dem Aktorelement 3 ausgegeben werden. Ebenfalls können Funktionen oder Aktionen, die mit dem gedrückten virtuellen Bedienelement verknüpft sind, durch Über- oder Unterschreiten einer Kraftschwelle ausgelöst werden.

Ein weiteres optionales Merkmal ist ein in oder an der Vorrichtung 1 positionierter Lautsprecher 7. Kommt es im Laufe der Bedienung der Vorrichtung 1 zu einer haptischen Rückkopplung durch das Aktorelement 3, so kann zeitgleich ein Signal von der Steuereinrichtung 4 auf dem Lautsprecher 7 ausgegeben werden. Das Signal kann beispielsweise ein Sample sein, das den Klang eines Tastendrucks nachbildet.

Optional kann die Vorrichtung 1 eine Schnittstelle 8 umfassen, welche die von der Steuereinrichtung 4 gesammelten und verarbeiteten Daten zur Weiterverarbeitung ausgibt. Eine solche Schnittstelle 8 kann beispielsweise mit einem Bussystem, einem Netzwerk oder dem Internet verbunden sein. Die Schnittstelle 8 kann aber auch als virtuelle Schnittstelle ausgebildet sein.

### Bezugszeichenliste

- 1: Vorrichtung
- 2: berührungsempfindliche Positionserfassungseinrichtung
- 3: Aktorelement
- 4: Steuereinrichtung
- 5: Anzeigeeinrichtung
- 6: Druckkraftsensor
- 7: Lautsprecher
- 8: Schnittstelle
- 20: virtuelles Bedienelement
- 21: graphische Repräsentation
- 22: Eingabefeld
- 23: aktives virtuelles Bedienelement
- 24: deaktiviertes virtuelles Bedienelement
- 25: Finger des Bedieners
- 26: erste Position
- 27: zweite Position
- 28: Trajektorie des Fingers
- 29: Rückkopplung
- 30: Vorschauansicht
- 40: Anzeige-Bedienvorrichtung
- 41: Frontblende
- 42: Drehdrückgeber
- 43: physisch ausgebildete Taste
- 50: Kraftfahrzeug
- 60: Mensch-Maschine-Schnittstelle
- 70: erste Kraftschwelle
- 71: zweite Kraftschwelle
- 80-89: Rückkopplungen
- 101-108: Verfahrensschritte

## Patentansprüche

1. Vorrichtung (1), insbesondere in einem Kraftfahrzeug (50), zur Eingabe eines Textes mit haptischer Rückkopplung, umfassend
eine berührungsempfindliche Positionserfassungseinrichtung (2) zum Bestimmen einer zweidimensionalen Betätigungselementposition,
mindestens ein mit der berührungsempfindlichen Positionserfassungseinrichtung (2) direkt oder indirekt verbundenes Aktorelement (3) zur haptischen Rückkopplung,
eine Steuereinrichtung (4),
**dadurch gekennzeichnet,**
**dass** die Steuereinrichtung (4) Auslösebereiche von virtuellen Bedienelementen (20) festlegt und dass beim Betreten und Verlassen des Auslösebereichs eines der virtuellen Bedienelemente (20) durch die zweidimensionale Betätigungselementposition jeweils ein Signal an dem Aktorelement (3) ausgegeben wird.

2. Vorrichtung nach Anspruch 1, **dadurch gekennzeichnet,**
**dass** die Vorrichtung (1) eine Anzeigeeinrichtung (5) umfasst.

3. Vorrichtung nach einem der Ansprüche 1 oder 2, **dadurch gekennzeichnet,**
**dass** zeitgleich mit dem Impuls am Aktorelement (3) ein akustisches Signal an einem Lautsprecher (7) ausgegeben wird.

4. Vorrichtung nach einem der Ansprüche 1 bis 3, **dadurch gekennzeichnet,**
**dass** die virtuellen Bedienelemente (20) eine Tastatur bilden.

5. Vorrichtung nach einem der Ansprüche 1 bis 4, **dadurch gekennzeichnet,**
**dass** die Vorrichtung (1) einen Druckkraftsensor (6) umfasst, wobei der Druckkraftsensor (6) einen Anpressdruck eines Betätigungselements auf der berührungsempfindlichen Positionserfassungseinrichtung (2) erfasst und der Steuereinrichtung (4) einen dem Anpressdruck entsprechenden Wert zuführt.

6. Vorrichtung nach einem der Ansprüche 1 bis 5, **dadurch gekennzeichnet,**
**dass** das Überschreiten einer Kraftschwelle am Druckkraftsensor (6) zum Betätigen des virtuellen Bedienelements (20), welches in dem Auslösebereich liegt, der gerade mit der Betätigungselementposition übereinstimmt, verwendet wird.

7. Vorrichtung nach einem der Ansprüche 1 bis 6, **dadurch gekennzeichnet,**
**dass** durch Überschreiten einer Kraftschwelle am Druckkraftsensor (6) ein Signal am Aktorelement (3) ausgegeben wird.

8. Vorrichtung nach einem der Ansprüche 1 bis 7, **dadurch gekennzeichnet,**
**dass** die virtuellen Bedienelemente (20) als graphische Repräsentation (21) auf der Anzeigeeinrichtung (5) dargestellt sind.

9. Vorrichtung nach einem der Ansprüche 1 bis 8, **dadurch gekennzeichnet,**
**dass** beim Betreten und Verlassen der Auslösebereiche der virtuellen Bedienelemente (20) durch die zweidimensionale Betätigungselementposition der Inhalt der virtuellen Bedienelemente (20) vergrößert auf der Anzeigeeinrichtung (5) dargestellt wird.

10. Vorrichtung nach einem der Ansprüche 1 bis 9, **dadurch gekennzeichnet,**
**dass** beim Betreten und Verlassen des Auslösebereichs eines der virtuellen Bedienelemente (20) durch die zweidimensionale Betätigungselementposition der Inhalt des virtuellen Bedienelements (20) als vorgelesener Text am Lautsprecher (7) ausgegeben wird.

11. Vorrichtung nach einem der Ansprüche 1 bis 10, **dadurch gekennzeichnet,**
**dass** ein Teil der virtuellen Bedienelemente (20) kontextbasiert deaktiviert und entsprechend in einer Darstellung auf der Anzeigeeinrichtung gekennzeichnet ist.

12. Vorrichtung nach einem der Ansprüche 1 bis 11, **dadurch gekennzeichnet,**
**dass** die Steuereinrichtung eine Schnittstelle (8) umfasst, welche die von der berührungsempfindlichen Positionserfassungseinrichtung (2) und dem Druckkraftsensor (6) erfassten Werte und/oder weitere Daten ausgibt.

13. Vorrichtung nach einem der Ansprüche 1 bis 12, **dadurch gekennzeichnet,**
**dass** an dem Lautsprecher (7) ein dem Anpressdruck proportionales Signal ausgegeben wird.

14. Verfahren, insbesondere in einem Kraftfahrzeug (50), zur Eingabe eines Textes auf einer virtuellen Tastatur mit haptischer Rückkopplung, die folgenden Schritte umfassend:
Zuordnen von Auslösebereichen zu virtuellen Bedienelementen (101),
Erfassen einer Betätigungselementposition (102),
Vergleich der Betätigungselementposition mit den Auslösebereichen der virtuellen Bedienelemente (103),
**dadurch gekennzeichnet,**
**dass** beim Betreten und Verlassen des Auslösebereichs eines der virtuellen Bedienelemente durch die Betätigungselementposition jeweils eine haptische Rückkopplung gegeben wird (104).

15. Verfahren nach Anspruch 14, **dadurch gekennzeichnet,**
**dass** neben der Betätigungselementposition auch eine Anpressdruckkraft erfasst wird (106).

16. Verfahren nach Anspruch 15, **dadurch gekennzeichnet,**
**dass** beim Überschreiten einer Kraftschwelle der Anpressdruckkraft eine haptische Rückkopplung gegeben wird (107).

17. Verfahren nach einem der Ansprüche 15 oder 16, **dadurch gekennzeichnet,**
**dass** beim Überschreiten einer weiteren Kraftschwelle der Anpressdruckkraft eine mit dem virtuellen Bedienelement, in dessen Auslösebereich sich gerade die Betätigungselementposition befindet, verknüpfte Funktion ausgelöst wird (108).

18. Verfahren nach einem der Ansprüche 14 bis 17, **dadurch gekennzeichnet,**
**dass** zeitgleich mit der haptischen Rückkopplung eine akustische Rückkopplung erfolgt (105).

19. Verfahren nach einem der Ansprüche 15 bis 18, **dadurch gekennzeichnet,**
**dass** bei Unterschreiten einer Kraftschwelle eine haptische Rückkopplung gegeben wird (109).

20. Verfahren nach einem der Ansprüche 15 bis 19, **dadurch gekennzeichnet,**
**dass** bei Unterschreiten der Kraftschwelle zusätzlich eine akustische Rückkopplung gegeben wird.

21. Verfahren nach einem der Ansprüche 14 bis 20, **dadurch gekennzeichnet,**
**dass** die haptischen Rückkopplungen beim Betreten und Verlassen unterschiedlich ausgeführt sind.

22. Verfahren nach einem der Ansprüche 14 bis 21, **dadurch gekennzeichnet, dass** die haptische Rückkopplung impulsartig ausgeführt wird.
